(19) Europäisches Patentamt

European Patent Office

Office européen des brevets

(11) Numéro de publication: **0 367 690 B1**

(12) **FASCICULE DE BREVET EUROPEEN**

(45) Date de publication de fascicule du brevet: **29.12.93**  (51) Int. Cl.⁵: $H02H \ 3/04$

(21) Numéro de dépôt: **89420414.8**

(22) Date de dépôt: **25.10.89**

(54) **Déclencheur différentiel à circuit test et à télécommande d'ouverture autoprotégée.**

(30) Priorité: **04.11.88 FR 8815056**

(43) Date de publication de la demande:
**09.05.90 Bulletin 90/19**

(45) Mention de la délivrance du brevet:
**29.12.93 Bulletin 93/52**

(84) Etats contractants désignés:
**AT BE DE ES GB IT**

(56) Documents cités:
**EP-A- 0 264 313**
**FR-A- 1 318 856**
**FR-A- 2 275 016**
**US-A- 3 943 409**

(73) Titulaire: **MERLIN GERIN**
**2, chemin des Sources**
**F-38240 Meylan(FR)**

(72) Inventeur: **Paupert, Marc**
**Merlin Gerin**
**Sce. Brevets**
**F-38050 Grenoble Cédex(FR)**

(74) Mandataire: **Hecke, Gérard et al**
**Merlin Gérin,**
**Sce. Propriété Industrielle**
**F-38050 Grenoble Cédex 9 (FR)**

## Description

L'invention est relative à un appareil électrique de protection différentielle, notamment un disjoncteur ou un interrupteur de courant de fuite, ayant un déclencheur différentiel comportant un transformateur sommateur associé à un relais de déclenchement, un circuit test équipé d'un interrupteur d'essai à bouton test, et un circuit de déclenchement à distance ayant un interrupteur de télécommande connecté à des bornes additionnelles en liaison électrique avec l'interrupteur d'essai, l'actionnement du bouton test ou de l'interrupteur de télécommande engendrant un courant différentiel artificiel détecté par le transformateur et le relais de déclenchement.

Un tel appareil connu est décrit dans les documents EP264313 et DE2909941. Le circuit test est raccordé directement à deux conducteurs actifs du réseau, en deux points disposés de part et d'autre du noyau du transformateur sommateur. Chaque manoeuvre de fermeture de l'interrupteur de télécommande et d'actionnement du bouton test assure le déclenchement différentiel. Le déclenchement du relais provoque l'ouverture automatique d'un interrupteur de protection pour la mise hors circuit du circuit test, indépendamment de l'état de l'interrupteur d'essai et de l'interrupteur de télécommande. Le réarmement de l'appareil commande la refermeture de l'interrupteur de protection. Lorsque l'appareil est en service, les bornes additionnelles du circuit test se trouvent en permanence sous tension dans l'état armé du déclencheur et sont accessibles de l'extérieur pour le branchement de la télécommande d'ouverture. Tout défaut par contacts directs ou indirects sur le circuit de déclenchement à distance, crée un courant de fuite à la terre, lequel n'est pas détecté par le transformateur sommateur. L'absence de protection d'isolement du circuit de déclenchement à distance est incompatible avec les critères de sécurité préconisés dans la plupart des installations électriques.

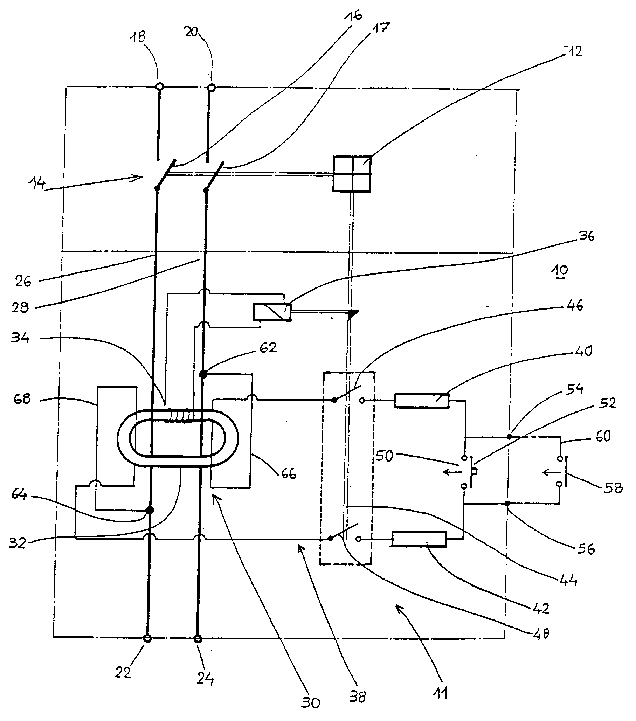

Le document FR-A-1.318.856 montre à sa figure 1 un appareil électrique de protection différentielle suivant le préambule de la revendication 1. Cet appareil comprend un interrupteur différentiel ayant un circuit d'essai à bouton test, et un circuit de déclenchement à distance ayant un interrupteur de télécommande connecté électriquement en parallèle aux bornes du bouton test. L'une des extrémités du circuit d'essai est branché à un premier conducteur actif d'un côté du noyau d'un transformateur-sommateur par l'intermediaire d'un enroulement auxiliaire, tandis que l'autre extrémité est reliée directement à un deuxième conducteur actif de l'autre côté du noyau du transformateur-sommateur. La fonction de l'enroulement auxiliaire unique consiste essentiellement à actionner le circuit d'essai, mais ne permet pas d'obtenir une sécurité totale selon la polarité de la tension alternative du réseau, et du mode de raccordement de l'appareil (alimentation par l'amont ou par l'aval). Dans certains cas, un courant de fuite par contact direct sur le circuit de déclenchement à distance n'est pas détecté par le transformateur sommateur.

L'objet de l'invention consiste à améliorer le niveau de protection d'un disjoncteur différentiel à télécommande.

L'appareil selon l'invention est caractérisé en ce que le déclencheur différentiel comporte un deuxième enroulement auxiliaire bobiné sur le noyau, et connecte électriquement entre l'autre des bornes additionnelles et l'autre point de raccordement du circuit test avec un deuxième conducteur actif du réseau, de manière à assurer une modification de l'aimantation du noyau suffisante pour engendrer un déclenchement du relais en présence d'un défaut à la terre sur le circuit de déclenchement à distance, indépendamment de la polarité de la tension alternative du réseau, et du mode de raccordement de l'appareil au réseau.

Le nombre de spires $N_t$ de chaque enroulement auxiliaire est supérieur ou égal au nombre de spires $N_p$ de l'enroulement primaire. Le seuil de protection d'isolement du circuit de déclenchement à distance est indépendant et au moins égal à la sensibilité de l'appareil.

D'autres avantages et caractéristiques ressortiront plus clairement de la description qui va suivre d'un mode de réalisation de l'invention donné à titre d'exemple non limitatif et représenté sur le dessin annexé.

Sur la figure, un appareil électrique de protection différentielle 10, notamment un disjoncteur ou un interrupteur de courant de fuite, comporte un déclencheur différentiel 11 associé à un mécanisme 12 de commande d'un dispositif de coupure 14 bipolaire à contacts d'interruption 16,17. L'appareil 10 est équipé d'une première paire de bornes 18,20 principales et d'une deuxième paire de bornes 22,24 principales de raccordement au réseau d'alimentation et à la charge. Les bornes 18,20 sont reliées électriquement aux bornes opposées 22,24 par un circuit interne de liaison à deux conducteurs actifs 26,28, dans lesquels sont insérés les contacts 16,17 du dispositif de coupure 14.

Le déclencheur différentiel 11 comporte un transformateur de sommation 30 ayant un noyau 32 en forme de tore entourant les conducteurs 26,28 actifs pour la détection d'un courant homopolaire. En fonction de la sensibilité de la protection différentielle, chaque conducteur 26,28 traverse directement le transformateur 30, ou est enroulé sur le noyau 32 selon au moins une spire pour former un enroulement primaire. Le noyau 32 comprend un enroulement secondaire 34 de mesure du courant différentiel, raccordé électriquement à un relais 36 de déclenchement, notamment du type électromagnétique à aimant de polarisation. Le relais 36 coopère avec le mécanisme 12 pour provoquer l'ouverture automatique des contacts 16,17 lorsque l'intensité du courant de fuite détecté par le transformateur 30, dépasse le seuil de déclenchement différentiel de l'appareil 10.

Le déclencheur différentiel 11 est équipé d'un circuit test 38 agencé en circuit dérivé de fuite renfermant en série une paire de résistances d'essai 40,42, un interrupteur de protection 44 à double contacts 46,48, et un interrupteur d'essai 50 à bouton test 52. Les contacts de l'interrupteur d'essai 50 sont connectés à deux bornes additionnelles 54,56 accessibles depuis l'extérieur pour la connexion d'un interrupteur de télécommande 58 appartenant à un circuit de déclenchement à distance 60. L'interrupteur de télécommande 58 est ainsi branché en parallèle sur l'interrupteur d'essai 50.

Le circuit test 38 est raccordé électriquement aux conducteurs actifs 26,28 en deux points de raccordement 62,64 disposés de part et d'autre du noyau 32. Le point de raccordement 62 est situé du côté de la borne principale 20, et l'autre point 64 du côté de la borne principale 22.

Le fonctionnement d'un tel déclencheur différentiel 11 à circuit test 38 ressort de l'appareil décrit dans le brevet européen 264313 précité, et il suffit de rappeler que la fermeture de l'interrupteur de télécommande 58 procure le même effet que la fermeture locale de l'interrupteur d'essai 50 par le bouton test 52, c'est à dire la création d'un courant différentiel artificiel entraînant l'ouverture des contacts 16,17 du dispositif de coupure 14 après déclenchement différentiel par le relais 36 et le mécanisme 12. Le déclenchement du relais 36 provoque l'ouverture automatique de l'interrupteur de protection 44 pour la mise hors circuit du circuit test 38, indépendamment de l'état de l'interrupteur d'essai 50 et de l'interrupteur de télécommande 58.

Selon l'invention, le circuit test 38 est doté d'une paire d'enroulements auxiliaires 66,68 de magnétisation, agencés entre les points de raccordement 62,64, et les contacts 46,48 respectifs de l'interrupteur de protection 44. Chaque enroulement auxiliaire 66,68 comporte au moins une spire bobinée sur le noyau 32, de manière à magnétiser le noyau 32 du transformateur 30, lorsque l'appareil 10 étant fermé, un défaut à la terre apparait sur le circuit de télécommande 60. Un tel défaut engendre alors un courant de fuite à la terre qui est détecté par le transformateur 30 grâce à la présence des deux enroulements auxiliaires 66,68.

En présence d'un défaut différentiel sur les conducteurs 26,28 du réseau, l'aimantation du noyau 32 dépend des ampère-tours Np.Id, Np étant le nombre de spires de l'enroulement primaire, et Id le courant différentiel de déclenchement. La sensibilité de l'appareil 10 peut être ajustée à une valeur prédéterminée, notamment 10 mA, 30 mA, 300 mA.

En présence d'un test ou d'une télécommande d'ouverture par actionnement respectif du bouton test 52 et de l'interrupteur de télécommande 58, l'aimantation du noyau 32 est fonction de la relation (1) suivante:

(1)     $(2Nt + Np)$ It

Nt étant le nombre de spires de chaque enroulement auxiliaire 66,68, et It le courant de déclenchement dans le circuit test 38.

Le circuit extérieur de déclenchement à distance 60 est autoprotégé en présence d'un défaut accidentel, indépendamment de la polarité de la tension alternative du réseau, et du mode de raccordement de l'appareil 10, c'est à dire en cas d'alimentation par l'amont (bornes principales 18,20), ou en cas d'alimentation opposée par l'aval (bornes principales 22,24).

En fonction de ces critères, l'aimantation résultante du noyau 32 peut conduire à deux états dépendant des relations (2) et (3) suivantes:

(2)     Nt.If

et

(3)     $(Np + Nt)$ If

If étant le courant de fuite s'établissant dans le circuit test 38 du déclencheur 11 lorsqu'un défaut apparait sur le circuit de déclenchement à distance 60, notamment l'une des bornes additionnelles 54,56 ou une borne de l'interrupteur de télécommande 58.

Chacun de ces deux états d'aimantation du transformateur 30 doit engendrer un déclenchement du relais 36 pour assurer la sécurité totale. La condition d'autoprotection de la télécommande d'ouverture est atteinte lorsque le nombre de spires Nt de chaque enroulement auxiliaire 66,68 est supérieur ou égal à celui Np de l'enroulement primaire.

On remarque que le nombre de spires Nt de chaque enroulement auxiliaire 66,68 permet d'ajuster le seuil de protection d'isolement du circuit de déclenchement à distance 60, lequel doit être au moins égal à la sensibilité de l'appareil 10. A titre d'exemple, pour une sensibilité de 300 mA, le seuil de protection d'isolement de la télécommande d'ouverture peut être 30 mA ou 10 mA.

Le déclencheur différentiel 11 peut être logé soit dans un boîtier monobloc de l'appareil 10, soit dans un module séparé adaptable au bloc de coupure. Le disjoncteur ou l'interrupteur peut également être tripolaire ou tétrapolaire.

**Revendications**

1. Appareil électrique de protection différentielle, notamment un disjoncteur ou un interrupteur de courant de fuite, ayant un déclencheur différentiel (11), comportant :
   - un transformateur-sommateur (30) ayant un noyau (32) traversé par des conducteurs (26, 28) d'un réseau formant un enroulement primaire et sur lequel est bobiné un enroulement secondaire (34) de mesure raccordé électriquement à un relais de déclenchement (36),
   - un circuit test (38) raccordé à deux conducteurs actifs (26, 28) du réseau de part et d'autre du noyau (32) et équipé d'une resistance d'essai (40, 42) et d'un interrupteur d'essai (50) à bouton test (52),
   - un circuit de déclenchement à distance (60), ayant un interrupteur de télécommande (58) connecté électriquement à des bornes additionnelles (54, 56), et en parallèle avec l'interrupteur d'essai (50), l'actionnement du bouton test (52) ou de l'interrupteur de télécommande (58), engendrant un courant différentiel artificiel détecté par le transformateur (30) et le relais (36),
   - et un premier enroulement auxiliaire (66) bobiné sur le noyau (32), et connecté électriquement dans le circuit test entre une (54) des bornes additionnelles et un point de raccordement (62) du circuit test (38) avec un premier conducteur actif (28) du réseau,

   caractérisé en ce que le déclencheur différentiel (11) comporte un deuxième enroulement auxiliaire (68) bobiné sur le noyau (32), et connecte électriquement dans le circuit test entre l'autre (56) des bornes additionnelles et l'autre point de raccordement (64) du circuit test (38) avec un deuxième conducteur actif (26) du réseau, de manière à assurer une modification de l'aimantation au noyau (32) suffisante pour engendrer un déclenchement du relais (36) en présence d'un défaut à la terre sur le circuit de déclenchement à distance (60), indépendamment de la polarité de la tension alternative du réseau, et du mode de raccordement de l'appareil (10) au réseau.

2. Appareil électrique de protection différentielle selon la revendication 1, caractérisé en ce que le nombre de spires $N_t$ de chaque enroulement auxiliaire (66, 68) est supérieur ou égal au nombre de spires $N_p$ dudit enroulement primaire traversant le tore.

3. Appareil électrique de protection différentielle selon la revendication 1 ou 2, caractérisé en ce que le seuil de protection d'isolement du circuit de déclenchement à distance (60) est au moins égal à la sensibilité de l'appareil (10).

4. Appareil électrique de protection différentielle selon l'une des revendications 1 à 3, caractérisé en ce que le circuit test (38) comporte un interrupteur de protection (44) à double contacts (46, 48) insérés en série entre les enroulements auxiliaires (66, 68) et deux résistances d'essai (40, 42), reliées respectivement aux bornes additionnelles (54, 56).

**Claims**

1. An electrical apparatus for differential protection, notably an earth leakage current circuit breaker or switch, having a differential trip device (11) comprising :
   - a summing transformer (30) having a core (32) through which conductors (26, 28) of a power supply system pass forming a primary winding and on which there is wound a secondary measuring winding (34) electrically connected to a trip relay (36),
   - a test circuit (38) connected to two active conductors (26, 28) of the power supply system on each side of the core (32), equipped with a test resistance (40, 42) and a test switch (50) with test button (52),
   - a remote tripping circuit (60), having a remote control switch (58) electrically connected to additional terminals (54, 56), and in parallel with the test switch (50), actuation of the test button (52) or of the remote control switch (58) generating an artificial differential current detected by the transformer (30) and relay (36),
   - and a first auxiliary winding (66) wound on the core (32) and electrically connected in the test circuit between one (54) of the additional terminals and one connecting point (62) of the test circuit (38) with a first active conductor (28) of the power supply system,

   characterized in that the differential trip device (11) comprises a second auxiliary winding (68) wound on the core (32), and electrically connected in the test circuit between the other (56) of the additional terminals and the other connecting point (64) of the test circuit (38) with a second active conductor (26) of the power supply system, in such a way as to ensure a modification of the magnetization of the core (32) sufficient to bring about tripping of the relay (36) in the presence of an earth fault on the remote tripping circuit (60), regardless of the polarity of the A.C. voltage of the power supply system, and of the connection mode of the apparatus (10) to the power supply system.

2. The electrical apparatus for differential protection according to claim 1, characterized in that the number of turns Nt of each auxiliary winding (66, 68) is greater than or equal to the number of turns Np of said primary winding passing through the toroid.

3. The electrical apparatus for differential protection according to claim 1 or 2, characterized in that the isolation protection threshold of the remote tripping circuit (60) is at least equal to the sensitivity of the apparatus (10).

4. The electrical apparatus for differential protection according to one of the claims 1 to 3, characterized in that the test circuit (38) comprises a protective switch (44) with double contacts (46, 48) inserted in series between the auxiliary windings (66, 68) and two test resistances (40, 42) respectively connected to the additional terminals (54, 56).

**Patentansprüche**

1. Schaltgerät mit Differenzstromschutz, insbesondere ein Fehlerstrom-Leistungsschalter oder -Schutzschalter, mit einem Differenzstromauslöser (11), der folgende Komponenten umfaßt:
   - einen Summenstromwandler (30) mit einem von den aktiven Leitern (26, 28) eines Netzes zur Bildung einer Primärwicklung durchragten Ringkern (32), der eine elektrisch mit einem Auslöserelais (36) verbundene Sekundär-Meßwicklung (34) trägt,
   - einen an zwei aktive Leiter (26, 28) des Netzes auf jeder Seite des Ringkerns (32) angeschlossenen Prüfstromkreis (38) mit einem Prüfwiderstand (40, 42) und einem Prüfschalter (50) mit Prüflaste (52),
   - einen Fernauslösekreis (60) mit einem Fernschalter (58), der elektrisch mit Zusatzklemmen (54, 56) verbunden und mit dem Prüfschalter (50) parallelgeschaltet ist, wobei durch Betätigung der Prüftaste (52) oder des Fernschalters (58) ein künstlicher Differenzfehlerstrom erzeugt wird, der vom Summenstromwandler (30) und vom Auslöserelais (36) erfaßt wird,
   - und eine erste Hilfswicklung (66), die um den Ringkern (32) gewickelt und in den Prüfstromkreis (38) zwischen einer (54) der Zusatzklemmen und einem Anschlußpunkt (62) zur Verbindung des Prüfstromkreises (38) mit einem ersten aktiven Leiter (28) des Netzes geschaltet ist,

   dadurch gekennzeichnet, daß der Differenzstromauslöser (11) eine zweite Hilfswicklung (68) umfaßt, die um den Ringkern (32) gewickelt und zwischen die andere Zusatzklemme (58) und den anderen Anschlußpunkt (64) zur Verbindung des Prüfstromkreises (38) mit einem zweiten aktiven Leiter (26) des Netzes geschaltet ist, derart daß bei Auftreten eines Erdfehlerstroms im Fernauslösekreis (60) unabhängig von der Polarität der Netzwechselspannung und der Anschlußart des Schaltgeräts (10) an das Netz die Magnetisierung des Ringkerns (32) in ausreichendem Maße verändert wird, um die Auslösung des Relais (36) zu bewirken.

2. Schaltgerät mit Differenzstromschutz nach Anspruch 1, dadurch gekennzeichnet, daß die Windungszahl Nt jeder Hilfswicklung (66, 68) höher oder gleich der Windungszahl Np der genannten Primärwicklung des Ringkerns ist.

3. Schaltgerät mit Differenzstromschutz nach Anspruch 1 oder 2, dadurch gekennzeichnet, daß der Ansprechwert für den Isolationsschutz des Fernauslösekreises (60) mindestens so hoch ist wie die Ansprechempfindlichkeit des Schaltgeräts (10).

4. Schaltgerät mit Differenzstromschutz nach einem der Ansprüche 1 bis 3, dadurch gekennzeichnet, daß der Prüfstromkreis (38) einen Schutzschalter (44) mit zwei Kontakten (44, 46) aufweist, die in Reihe zwischen die Hilfswicklungen (66, 68) und zwei an die Zusatzklemmen (54, 56) angeschlossenen Prüfwiderständen (40, 42) geschaltet sind.